# EUROPÄISCHE PATENTANMELDUNG

(11) **EP 0 905 314 A2**
(43) Veröffentlichungstag der Anmeldung: **31.03.1999**
(21) Anmeldenummer: 98117124.2
(22) Anmeldetag: 10.09.1998
(51) Int. Cl.: D21H 17/74, D21H 21/12, D21H 17/06

(54) **Verwendung von speziellen Zubereitungen als Entschäumer**

(30) Priorität: 19.09.1997 DE 19741357
(71) Anmelder: Henkel KGaA, 40589 Düsseldorf (DE)
(72) Erfinder: Abrîbat, Benoit, 91490 Dannemois (FR); Da Silva Marques, Maria, 77000 Vaux Le Penil (FR)

(57) **Zusammenfassung**

Vorgeschlagen wird die Verwendung von Zubereitungen, enthaltend
(a) Fettsäureniedrigalkylester,
(b) hydrophobierte Kieselsäuren und
(c) Siliconverbindungen
als Entschäumer in der Papierherstellung. Die Mischungen sind frei von Amidverbindungen und paraffinischen Kohlenwasserstoffen und zeichnen sich gegenüber Produkten des Stands der Technik vor allem dadurch aus, daß sie über eine verbesserte Entschäumerwirkung verfügen und zudem keine unerwünschten Ölphasen bilden.

## Beschreibung

### Gebiet der Erfindung

Die Erfindung betrifft die Verwendung von Zubereitungen mit einem Gehalt an Fettsäureestern, hydrophobierten Kieselsäuren und Siliconverbindungen als Entschäumer für die Papierindustrie.

### Stand der Technik

Als Ausgangsstoffe für die Herstellung von Gebrauchspapieren kommen die verschiedenste Materialien in Betracht: Holzstoffe, wie beispielsweise Holzschliff, die meist in integrierter Fertigungsweise in der Papierfabrik erzeugt werden, gelangen als pumpfähiger Brei *(Pulpe)* in die Stoffaufbereitung. Zellstoffe, beispielsweise Cellulose, werden überwiegend in trockener Form angeliefert und im *Pulper* zu einem wäßrigen Faserbrei suspendiert. Altpapier wird üblicherweise zunächst von Verunreinigungen befreit, sortiert, zerkleinert, in Wasser dispergiert und durch Flotation ("Deinking") von Druckfarben und Füllstoffen, wie beispielsweise Kaolin, befreit. Die Rohmaterialien werden der sogenannten Stoffzentrale zugeführt, in der die aufbereiteten Faserstoffsuspensionen *(Halbstoffe)* in der Mischbütte unter Zugabe von Hilfsstoffen zum sogenannten *Ganzstoff* verarbeitet werden. Bei diesen Vorgängen kann es zu unerwünschter Schaumentwicklung kommen, weshalb man den Pulpen Antischaummittel zusetzt.

Aus der deutschen Patentanmeldung **DE-A1 4120961** (Henkel) sind Umsetzungsprodukte von Triglyceriden mit Polyaminen in Kombination mit hydrophobierten Kieselsäuren und Siliconen bekannt, die als Entschäumer in der Papier- und Lackherstellung eingesetzt werden. Als weitere Papierentschäumer kommen Fettsäurehydroxystearylester **[DE-AS 2209559**], Fettketone, wie z.B. Stearon oder Behenon **[DE-AS 2553990],** Amide auf Basis von Carbonsäurensäuren und α-Hydroxyaminen **[DE-AS 2557898, DE-AS 2558040]** in Frage. Die Produkte besitzen jedoch verschiedene Nachteile: zum einen besteht ein Bedürfnis nach effizienteren Entschäumern, zum anderen nach Stoffen, die rascher und vollständiger biologisch abgebaut werden. Insbesondere Entschäumer auf Basis von Amidverbindungen oder Paraffinkohlenwasserstoffen sind aus diesem Grunde zunehmend unerwünscht, zumal diese sich im Laufe des Prozesses als schwarze schmierige Ölphase absetzen und nur mit großen Schwierigkeiten abgetrennt werden können.

Die Aufgabe der Erfindung hat somit darin bestanden, neue Entschäumer für die Papierherstellung zur Verfügung zu stellen, die nicht nur über ein verbessertes Schaumdämpfungsverhalten verfügen, sondern sich insbesondere auch nicht im Laufe des Verfahrens als dunkelverfärbte Ölphasen absetzen und zudem über eine gute biologische Abbaubarkeit verfügen.

### Beschreibung der Erfindung

Gegenstand der Erfindung ist die Verwendung von Zubereitungen, enthaltend
(a) Fettsäureniedrigalkylester,
(b) hydrophobierte Kieselsäuren und
(c) Siliconverbindungen
als Entschäumer in der Papierherstellung.

Überraschenderweise wurde gefunden, daß die erfindungsgemäßen Zubereitungen gegenüber den Produkten des Stands der Technik nicht nur eine verbesserte schaumdrückende Wirkung zeigen, die Bildung dunkelgefärbter Ölphasen auf der Papierpulpe wird zudem zuverlässig vermieden. Ein weiterer Vorteil der Zubereitungen besteht darin, daß sie in der Pulpe rasch und vollständig biologisch abgebaut werden.

### Fettsäureniedrigalkylester

Fettsäureniedrigalkylester, die als Komponente (a) eingesetzt werden können, folgen vorzugsweise der Formel **(I)**, 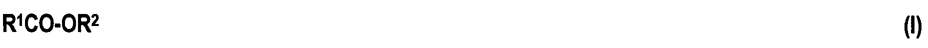 in der R¹CO für einen linearen oder verzweigten, gesättigten oder ungesättigten, aliphatischen Acylrest mit 6 bis 22 Kohlenstoffatomen und R² für einen linearen oder verzweigten Alkylrest mit 1 bis 4 Kohlenstoffatomen steht. Typische Beispiele sind Ethyl-, n-Propyl-, i-Propyl-, n-Butyl-, i-Butyl-, sec. Butyl-, tert.Butyl- und insbesondere Methylester auf Basis von Fettsäuren mit 6 bis 22 und vorzugsweise 12 bis 18 Kohlenstoffatomen, als da sind: Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. In einer bevorzugten Ausführungsform der Erfindung werden Methylester auf Basis von technischen Kokos- bzw. Talgfettsäureschnitten eingesetzt.

### Hydrophobierte Kieselsäuren

Typische Beispiele für geeignete hydrophobierte Kieselsäure stellen die sogenannten Aerosile dar, bei denen es sich um hochdisperse Kieselsäuren mit über 99 Gew.-% SiO₂-Anteil handelt, welche zunächst durch Hydrolyse von Siliciumtetrachlorid in einer Knallgasflamme hergestellt und dann durch Behandlung mit Chloralkylsilanen, wie z.B. Dichlordimethylsilan hydrophobiert werden. Die hydrophobierten Kieselsäuren besitzen auf ihrer Oberfläche SiOH-Gruppen, die über relativ schwache Wasserstoffbrückenbindungen miteinander verknüpft sind, wodurch es zur Bildung von dreidimensionalen Strukturen kommen kann, die für die Schaumdämpfung sehr vorteilhaft sind, Die isolierten Teilchen besitzen hingegen üblicherweise einen Durchmesser von 10 bis 20 nm und eine innere Oberfläche von 100 bis 400 m²/Å. Übersichten zu hydrophobierten Kieselsäuren der genannten Art finden sich beispielsweise in **Chem.Ztg. 89, 437 (1965).**

### Siliconverbindungen

Geeignete Siliconverbindungen sind beispielsweise Dimethylpolysiloxane, Methylphenylpolysiloxane, cyclische Silicone sowie amino-, fettsäure-, alkohol-, polyether-, epoxy-, fluor-, glykosid- und/oder alkylmodifizierte Silicone, die bei Raumtemperatur als feste Harze, vorzugsweise jedoch als flüssige Öle vorliegen können.

### Verzweigte Fettalkohole

Als weitere Inhaltsstoffe können die erfindungsgemäßen Entschäumerzubereitungen verzweigte primäre Alkohole mit 8 bis 36 Kohlenstoffatomen enthalten. Hierbei kann es sich um verzweigte Fettalkohole, wie beispielsweise Isotridecyl- oder Isostearylalkohol oder um sogenannte Guerbetalkohole handeln, die durch Kondensation von linearen (Fett-)alkoholen mit 4 bis 18 Kohlenstoffatomen erhalten werden. Typische Beispiele hierfür sind 2-Ethylhexylalkohol und 2-Octyl-dodecanol.

### Entschäumerzubereitungen

In einer bevorzugten Ausführungsform der Erfindung werden Entschäumerzubereitungen eingesetzt, enthaltend
(a) 55 bis 94, vorzugsweise 85 bis 90 Gew.-% Fettsäureniedrigalkylester,
(b) 5 bis 15, vorzugsweise 8 bis 12 Gew.-% hydrophobierte Kieselsäuren,
(c) 1 bis 5, vorzugsweise 1 bis 2 Gew.-% Siliconverbindungen und
(d) 0 bis 30, vorzugsweise 10 bis 20 Gew.-% verzweigte Fettalkohole,
mit der Maßgabe, daß sich die Einsatzmengen gegebenenfalls unter Mitverwendungen weiterer typischer Zusatzstoffe zu 100 Gew.-% ergänzen. Ein besonderer Vorteil besteht darin, daß die Zubereitungen frei sind von Amidverbindungen, wie z.B. Ethylenbisstearamid und/oder Paraffinkohlenwasserstoffen, wie z.B. Mineralöl.

### Beispiele

**Entschäumerwirkung.** Die schaumdämpfende Wirkung der erfindungsgemäßen Zubereitungen wurde an "brown stock"-Wasser aus der Zellstoffherstellung geprüft. Hierzu wurden in einen senkrecht stehenden beheizbaren Glaszylinder mit einem Volumen von 1 Liter, versehen mit einer Volumen-Kalibrierung, mit einer porösen Glasplatte am unteren Ende, durch die feinverteilt Luft eingeblasen werden kann sowie mit einer Umpump-Einrichtung für Flüssigkeit, 400 ml heißes "brown stock"-Wasser aus der Zellstoff-Herstellung eingefüllt. Das "brown stock"-Wasser enthielt 19 Gew.-% Trockensubstanz und 2,43 Gew.-% NaOH. Die Dichte betrug 1,105 und der pH-Wert 12,7. Mittels der Heizvorrichtung wurde das "brown-stock"-Wasser auf 75 - 80°C gehalten. Unter Umpumpen der Flüssigkeit wurde solange Luft durch die Flüssigkeit im Glaszylinder gepumpt, bis der Glaszylinder vollständig mit Flüssigkeit und Schaum gefüllt war. Dann wurden 0,5 ml Testentschäumer zugegeben und der Schaumzerfall als Funktion der Zeit gemessen. Die Kinetik der Schaumdämpfung ist in Tabelle 1 wiedergegeben:

**Tabelle 1**

| **Kinetik der Schaumdämpfung** | | | | | | | |
|---|---|---|---|---|---|---|---|
| **Zusammensetzung** | **1** | **2** | **3** | **V1** | **V2** | **V3** | **V4** |
| Kokosfettsäuremethylester | 89 | 86 | 80 | - | - | - | - |
| Hydrophobierte Kieselsäure¹⁾ | 10 | 12 | 15 | 10 | 15 | 10 | 15 |
| Dimethicone Copolyol²⁾ | 1 | 2 | 5 | - | - | 1 | 2 |
| Ethylenbisstearamid | - | - | - | 1 | 2 | - | - |
| Mineralöl | - | - | - | 89 | 83 | 89 | 83 |

| ***Schaumhöhe [ml]*** | | | | | | | |
|---|---|---|---|---|---|---|---|
| - sofort | 600 | | | | | | |
| - nach 1 min | 400 | 300 | 200 | 500 | 400 | 500 | 400 |
| - nach 2 min | 250 | 100 | 75 | 350 | 300 | 400 | 300 |
| - nach 3 min | 0 | 0 | 0 | 75 | 50 | 150 | 75 |
| - nach 5 min | 0 | 0 | 0 | 0 | 0 | 10 | 0 |

| | | | | | | | |
|---|---|---|---|---|---|---|---|
| 1) Aerosil R-972 (Degussa) | | | | | | | |
| 2) (Th.Goldschmidt) | | | | | | | |

## Patentansprüche

1. Verwendung von Zubereitungen, enthaltend
(a) Fettsäureniedrigalkylester,
(b) hydrophobierte Kieselsäuren und
(c) Siliconverbindungen
als Entschäumer in der Papierherstellung.

2. Verwendung nach Anspruch 1, **dadurch gekennzeichnet**, daß man als Komponente (a) Fettsäureniedrigalkylester der Formel **(I)** einsetzt, 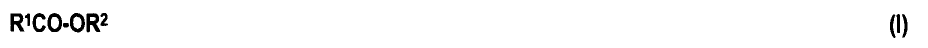 in der R¹CO für einen linearen oder verzweigten, gesättigten oder ungesättigten, aliphatischen Acylrest mit 6 bis 22 Kohlenstoffatomen und R² für einen linearen oder verzweigten Alkylrest mit 1 bis 4 Kohlenstoffatomen steht.

3. Verwendung nach den Ansprüchen 1 und 2, **dadurch gekennzeichnet**, daß man als Komponente (b) mit Dichlordimethylsilan hydrophobierte Kieselsäuren einsetzt.

4. Verwendung nach den Ansprüchen 1 bis 3, **dadurch gekennzeichnet**, daß man als Komponente (c) Siliconverbindungen einsetzt, die ausgewählt sind aus der Gruppe, die gebildet wird von Dimethylpolysiloxanen, Methylphenylpolysiloxanen, cyclischen Siliconen sowie amino-, fettsäure-, alkohol-, polyether-, epoxy-, fluor-, glykosid- und/oder alkylmodifizierte Siliconölen bzw. Siliconharzen.

5. Verwendung nach den Ansprüchen 1 bis 4, **dadurch gekennzeichnet**, daß man Zubereitungen einsetzt, enthaltend
(a) 55 bis 94 Gew.-% Fettsäureniedrigalkylester,
(b) 5 bis 15 Gew.-% hydrophobierte Kieselsäuren,
(c) 1 bis 5 Gew.-% Siliconverbindungen und
(d) 0 bis 30 Gew.-% verzweigte Fettalkohole,
mit der Maßgabe, daß sich die Einsatzmengen gegebenenfalls unter Mitverwendungen weiterer typischer Zusatzstoffe zu 100 Gew.-% ergänzen.

6. Verwendung nach den Ansprüchen 1 bis 5, **dadurch gekennzeichnet,** daß die Zubereitungen frei sind von Amidverbindungen und/oder Paraffinkohlenwasserstoffen.
